# FASCICULE DE BREVET EUROPEEN

(11) **EP 0 794 117 B1**
(45) Date de publication et mention de la délivrance du brevet: **04.09.2002**
(21) Numéro de dépôt: 97400512.6
(22) Date de dépôt: 06.03.1997
(51) Int. Cl.: B64C 39/00, F42B 15/04, F41G 7/32, G02B 6/44

(54) **Engin volant filoguide**
Fernbedienungssystem für eine mit einem Draht gesteuerte Rakete
Wire-controlled missile

(30) Priorité: 08.03.1996 FR 9602958
(43) Date de publication de la demande: 10.09.1997
(73) Titulaire: European Aeronautic Defence and Space Company - EADS France, 75016 Paris (FR)
(72) Inventeur: Panot, Christian, 78000 Versailles (FR); Barnier, Jean-François, 92320 Chatillon (FR); Debourle, François, 92160 Antony (FR)
(74) Mandataire: Dubois-Chabert, Guy

(56) Documents cités:
- EP-A- 0 467 354
- GB-A- 2 250 718
- US-A- 3 296 927
- US-A- 4 974 793

## Description

### Domaine technique

La présente invention concerne un engin volant filoguidé.

### Etat de la technique antérieure

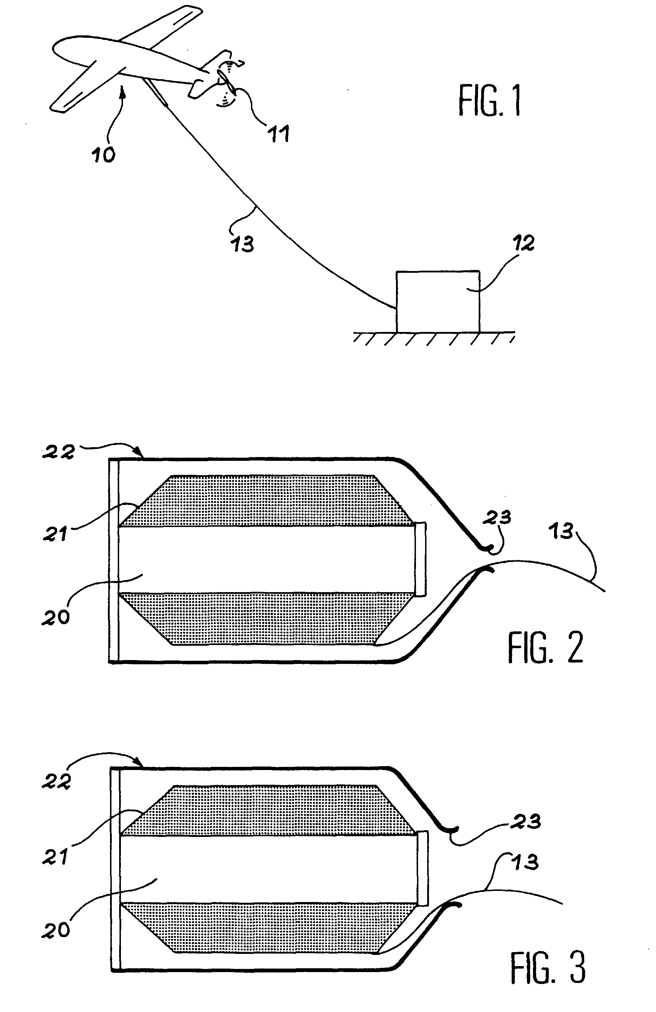

De nombreux engins spatiaux sont filoguidés, c'est-à-dire guidés par fils, à partir d'un poste de télécommande. La figure 1 représente ainsi un engin volant filoguidé 10, mû par une hélice 11, télécommandé à partir d'un poste de commande 12, au sol, à l'aide d'un fil de liaison 13.

Certains de ces engins, tels les missiles, sont prévus pour être détruits en fin de trajectoire, d'autres tels les aérodynes peuvent être réutilisés. Le fil de liaison sert à envoyer à l'engin volant, depuis le poste de commande, les signaux nécessaires à l'adaptation de sa trajectoire. Généralement le fil de liaison est alors enroulé sur un touret situé à l'arrière de l'engin, de manière à se dévider à vitesse nulle par rapport au sol.

La référence [1] citée en fin de description décrit un équipement d'un engin volant piloté par fil de liaison à partir d'un poste de commande. Cet équipement de bord est destiné à permettre la transmission bidirectionnelle de signaux entre le poste de commande au sol et l'engin volant, à l'aide d'un fil de liaison, et comporte un magasin pour une réserve de fil de liaison enroulée sur un tambour, muni d'un mécanisme de dévidage. Certaines variantes comportent un système de rembobinage entraîné par un moteur réversible, un moyen dynamométrique qui détermine la traction exercée sur le fil de liaison et des moyens d'asservissement qui agissent sur le moteur pour éviter une rupture du fil de liaison, ou un mou excessif. En outre, cet équipement peut comporter un appareil de navigation type "GPS" ("Global Positioning System" ou système de positionnement global) qui détermine les coordonnées relatives en altitude et distance horizontale de l'engin par rapport au poste de commande. Des moyens de calcul permettent de calculer la longueur de fil de liaison correspondant à une pente choisie au poste de commande, et de commander l'enroulement-dévidage de fil pour ajuster la longueur déroulée.

Le guidage par un fil de liaison électrique était jusqu'ici pratiquement réservé aux missiles, le débit relativement faible d'informations transmises par le conducteur ne permettant pas l'emport de caméras.

L'emploi de la fibre optique comme fil de liaison permet des débits d'information de l'ordre du Gigabit/s et autorise l'emploi de caméras embarquées et l'extension de la télécommande à fibre optique aux aérodynes légers.

Dans des engins d'observation, équipés d'une caméra, le fil de liaison permet alors un échange de signaux de commande des paramètres de vol et d'orientation de la caméra, et de signaux d'image entre l'engin et le poste de commande.

L'usage d'un fil de liaison permet de s'affranchir de certaines contraintes des transmissions hertziennes à grand débit d'information, à savoir la nécessité d'antennes orientables directives, les risques de brouillage et d'indiscrétions, et le poids des émetteurs embarqués.

Les contraintes d'utilisation sont légèrement différentes dans le cas des missiles et dans celui des aérodynes.

Dans le premier cas on a de très grandes vitesses de dévidage, des trajectoires relativement simples, des risques quasi nuls d'accrochage du fil de liaison par les structures arrières, et des risques d'agression thermique de ce fil (notamment en phase départ).

Dans le second cas on a de faibles vitesses de dévidage, des trajectoires complexes avec possibilité de retour sur des zones antérieurement survolées, des risques d'accrochage du fil de liaison dans les structures arrières ou dans l'hélice (surtout s'il s'agit d'une hélice propulsive). La légèreté du fil de liaison aggrave d'ailleurs ces risques d'accrochage.

Les figures 2 et 3 représentent les deux principales configurations utilisées pour le bobinage du fil de liaison à l'intérieur de l'engin volant. Sur ces figures est représenté un noyau 20, entouré du fil de liaison bobiné 21, situé à l'intérieur d'un carter 22, qui se termine par un convergent 23 laissant passer le fil de liaison 13 vers l'extérieur. Ces deux configurations ne diffèrent pratiquement que par le diamètre du convergent 23, très faible dans le premier cas.

Dans ces deux configurations le fil de liaison débouche très près du noyau bobiné.

Différents documents de l'art antérieur sont cités en fin de description.

La référence [2] décrit un magasin à fil pour missile.

La référence [3] décrit un dispositif de dévidage d'un fil de liaison, qui dans ce cas est une fibre optique, comprenant un conduit flexible, utilisable notamment dans le domaine des missiles.

La référence [4] décrit un système pour dévider une fibre optique.

L'invention a pour objet de pallier le problème de risque d'accrochage du fil de liaison dans les structures arrières ou dans l'hélice d'un engin volant filoguidé.

### Exposé de l'invention

La présente invention concerne un engin volant filoguidé, télécommandé à partir d'un poste de commande à l'aide d'un fil de liaison, ledit engin comportant un noyau bobiné, sur lequel s'enroule le fil de liaison, situé dans un carter et un convergent, situé en sortie de ce carter, permettant le passage du fil de liaison vers l'extérieur, caractérisé en ce qu'il comprend un dispositif de protection du fil de liaison, situé en sortie du convergent, formé de plusieurs anneaux de _guidage, qui sont traversés successivement par ledit fil de liaison.

Avantageusement le dernier anneau de guidage peut être remplacé par un embout évasé limitant les microcourbures du fil.

Avantageusement le dispositif de protection est fixé au carter à l'aide d'un système amortisseur, constitué par exemple par un ressort, pour limiter les courbures du fil de liaison.

Lorsque l'engin comporte deux poutres arrières parallèles dans un sens horizontal, des fils ou un filet de protection du fil de liaison peuvent être interposés sur ces poutres arrières.

Dans un exemple de réalisation avantageuse le fil de liaison est une fibre optique.

L'emploi d'une fibre optique comme fil de liaison présente les avantages suivants :
- quasi-insensibilité aux brouillages (électromagnétiques en particulier) ;
- débit important d'informations permettant l'emport d'une caméra et la transmission d'images en temps réel ;
- discrétion radio pour l'engin télécommandé et l'installation de commande au sol.

### Brève description des dessins

- La figure 1 illustre un schéma général d'un système de l'art antérieur ;
- les figures 2 et 3 illustrent deux réalisations de l'art antérieur ;
- la figure 4 illustre un exemple de réalisation du système de l'invention ;
- les figures 5 à 7 illustrent des variantes de réalisation du système de l'invention.

### Exposé détaillé de modes de réalisation

Comme représenté sur la figure 1, l'invention concerne un engin volant filoguidé 10, par exemple un missile, un drone ou tout autre aérodyne, télécommandé à partir d'un poste de commande 12, par exemple au sol. Ce poste 12 permet la télécommande de cet engin volant, mû par exemple par une hélice 11 commandée par un moteur, à l'aide d'un fil de liaison 13 qui peut avantageusement être une fibre optique.

Comme représenté sur les figures 2 et 3, un convergent 23 disposé dans cet engin filoguidé, permet le passage du fil de liaison 13 issu d'un noyau 20 bobiné, vers l'extérieur.

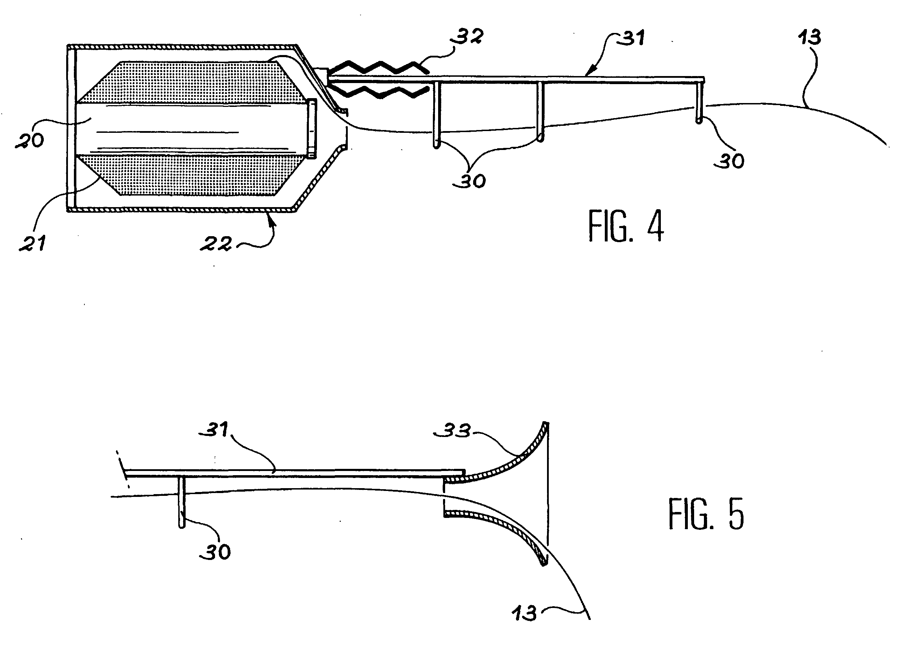

Dans l'exemple de réalisation illustré sur la figure 4 le fil de liaison 13 en sortie du convergent 23 traverse une série d'anneaux de guidage 30 , par exemple dans un dispositif 31 de type canne à pêche. Ce dispositif de protection 31 peut, avantageusement, être fixé au carter 22 à l'aide d'un dispositif amortisseur 32. Ce dispositif amortisseur 32 permet alors de limiter les courbures du fil de liaison, notamment lorsque l'engin filoguidé effectue des virages.

Ce dispositif canne à pêche 31 peut être rendu télescopique, avec un déploiement automatique ou non.

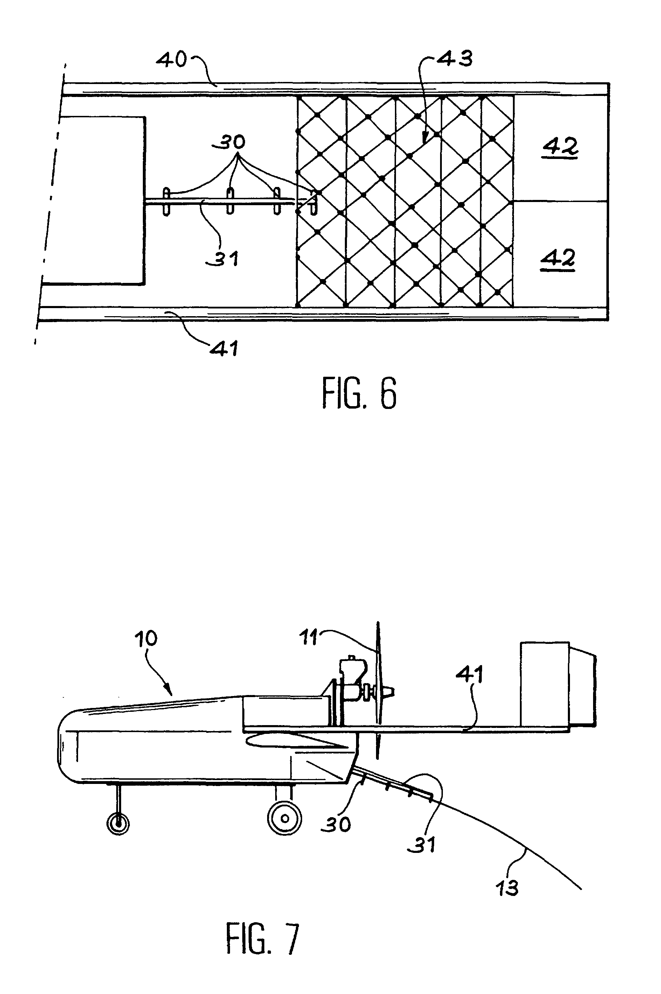

Comme représenté sur la figure 5 le dernier anneau de guidage peut être remplacé par un embout évasé 33 ayant la forme de l'embouchure d'une trompette, permettant de limiter les microcourbures du fil de liaison 13, qui sont préjudiciables à celui-ci, en imposant une valeur minimale du rayon de courbure de ce fil.

Comme représenté sur les figures 6 et 7, dans le cas d'aérodynes comportant deux poutres 40 et 41 vers l'arrière, il est possible d'empêcher un départ de la fibre vers les gouvernes 42 en disposant entre elles un filet ou des rangs de fils de protection 43.

La figure 6 présente un tel type de protection vu de haut ; plusieurs types de maillage pouvant être utilisés pour réaliser un tel filet.

La figure 7 présente un schéma d'aérodyne ainsi équipé.

## Revendications

1. Engin volant filoguidé, télécommandé à partir d'un poste de commande à l'aide d'un fil de liaison (13), comportant un noyau bobiné, sur lequel s'enroule le fil de liaison (13), situé dans un carter (22) et un convergent, situé en sortie de ce carter (22), permettant le passage du fil de liaison vers l'extérieur, **caractérisé en ce qu'**il comprend un dispositif de protection du fil de liaison (31), situé en sortie du convergent, formé de plusieurs anneaux de guidage (30), qui sont traversés successivement par ledit fil de liaison.

2. Engin selon la revendication 1, dans lequel le dispositif de protection (31) est de type canne à pêche.

3. Engin selon la revendication 2, dans lequel le dernier anneau de guidage est formé par un embout évasé (33) limitant les microcourbures du fil.

4. Engin selon la revendication 1, dans lequel le dispositif de protection (31) est fixé au carter (22) à l'aide d'un système amortisseur (32) pour limiter les courbures du fil de liaison.

5. Engin selon la revendication 4, dans lequel le système amortisseur (32) est constitué par un ressort.

6. Engin selon la revendication 1, comportant deux poutres arrières (40, 41) parallèles dans un sens horizontal, et un filet (43) de protection du fil de liaison disposé sur ces poutres arrières.

7. Engin selon l'une quelconque des revendications 1 à 6, dans lequel le fil de liaison (13) est une fibre optique.

## Claims

1. Wire guided flying vehicle remotely controlled from a control station with the aid of a connecting wire (13), incorporating a wound core, on which is wound the connecting wire (13), located in a casing (22) and a nozzle, located at the outlet from said casing (22) and permitting the passage of the connecting wire to the outside, **characterized in that** it comprises a protection device for the connecting wire (31) located at the outlet from the nozzle and formed by several guide rings (30), which are successively traversed by said connecting wire.

2. Vehicle according to claim 1, **characterized in that** the device (31) is of the fishing rod type.

3. Vehicle according to claim 2, **characterized in that** the final guide ring is formed by a splayed end piece (33) limiting microcurvatures of the wire.

4. Vehicle according to claim 1, **characterized in that** the protection device (31) is fixed to the casing (22) with the aid of a damping system (32) for limiting curvatures of the connecting wire.

5. Vehicle according to claim 4, **characterized in that** the damping system (32) is constituted by a spring.

6. Vehicle according to claim 1, having two rear beams (40, 41) parallel in a horizontal direction and a protection net (43) for the connecting wire placed on said rear beams.

7. Vehicle according to any one of the claims 1 to 6, **characterized in that** the connecting wire (13) is a optical fibre.

## Patentansprüche

1. Draht- bzw. fadengesteuerter Flugkörper, der von einer Kommandostation aus mittels eines Verbindungsdrahts bzw. - fadens (13) ferngesteuert ist, mit einem Wickelkern, auf dem der Verbindungsdraht (13) aufgewickelt ist, und der sich in einem Gehäuse (22) befindet, sowie einem am Ausgang des Gehäuses gelegenen konvergierenden Teil, der gestattet, dass der Verbindungsdraht nach außen tritt,
**dadurch gekennzeichnet, dass** er eine am Ausgang des konvergierenden Teils befindliche Schutzvorrichtung (31) des Verbindungsdrahts aufweist, die aus mehreren Führungsringen (30) besteht, welche nacheinander von dem Führungsdraht durchlaufen werden.

2. Flugkörper nach Anspruch 1, wobei die Schutzvorrichtung (31) von der Art einer Angelrute ist.

3. Flugkörper nach Anspruch 2, wobei der Führungsring aus einem konisch erweiterten Ansatzstück, das die Mikrokrümmungen bzw. -verbiegungen des Drahts begrenzt, gebildet ist.

4. Flugkörper nach Anspruch 1, wobei die Schutzvorrichtung (31) mittels eines Dämpfungs- bzw. Pufferungssystems (32) am Gehäuse (22) befestigt ist, um die Krümmungen bzw. Verbiegungen des Verbindungsdrahts zu begrenzen.

5. Flugkörper nach Anspruch 4, wobei das Dämpfungssystem (32) aus einer Feder besteht.

6. Flugkörper nach Anspruch 1 mit zwei hinteren, in horizontaler Richtung parallelen Trägern (40,41) und einem auf/an den hinteren Trägern angeordneten Netz (43) zum Schutz des Verbindungsdrahts.

7. Flugkörper nach einem der Ansprüche 1 bis 6, wobei der Verbindungsdraht (13) eine Optikfaser ist.
